**Europäisches Patentamt**

**European Patent Office**

**Office européen des brevets**

(19)

(11) Veröffentlichungsnummer: **0 114 913**
**B1**

(12) # EUROPÄISCHE PATENTSCHRIFT

(45) Veröffentlichungstag der Patentschrift:
**05.11.86**

(21) Anmeldenummer: **83100826.3**

(22) Anmeldetag: **28.01.83**

(51) Int. Cl.⁴: **B 60 D 5/00,** B 61 D 17/22,
B 62 D 47/02, F 16 G 11/12

(54) **Faltenbalg für Fahrzeuge.**

(43) Veröffentlichungstag der Anmeldung:
**08.08.84 Patentblatt 84/32**

(45) Bekanntmachung des Hinweises auf die Patenterteilung:
**05.11.86 Patentblatt 86/45**

(84) Benannte Vertragsstaaten:
**BE CH DE FR LI**

(56) Entgegenhaltungen:
**CH-A-485 535**
**DE-A-2 726 724**
**DE-C-735 821**
**FR-A-1 313 154**
**GB-A-1 228 200**

(73) Patentinhaber: **HÜBNER Gummi- und Kunststoff GmbH, Agathofstrasse 15, D-3500 Kassel-Bettenhausen 1 (DE)**

(72) Erfinder: **Koch, Robert, Schlesierstrasse 3, D-3437 Bad Soden Allendorf (DE)**

(74) Vertreter: **Walter, Helmut, Aubingerstrasse 81, D-8000 München 60 (DE)**

LIBER, STOCKHOLM 1986

EP 0 114 913 B1

## Beschreibung

Die Erfindung bezieht sich auf einen Faltenbalg gemäß dem Gattungsbegriff des Anspruches 1.

Solche Faltenbälge werden zwischen den einander zugekehrten Enden zweier gelenkig miteinander verbundener Fahrzeugglieder eingesetzt, um eine ˚Ubergangsbrücke zwischen diesen beiden Fahrzeuggliedern tunnelförmig zu umschließen, damit Personen vom Fahrtwind, Witterungsunbilden und Staub geschützt über die ˚Ubergangsbrücke vom einen zum anderen Fahrzeugglied überwechseln können.

Im einzelnen befaßt sich die Erfindung mit der Befestigung eines solchen Faltenbalges an den beiden einander zugekehrten Stirnseiten der beiden Fahrzeugglieder. Für diese Befestigung ist die Fahrzeugwand rinnenförmig ausgebildet und in diese in Umfangsrichtung des Balges verlaufende Rinne ist ein Dichtprofil eingelegt. In das zugehörige Balgende ist ein Spannkabel eingenäht. Das Spannkabel legt sich in die Rinne der Fahrzeugwand und hält den Faltenbalg gegenüber der Fahrzeugwand. Um das Balgende dem Fahrzeuggliedende zuordnen oder vom Fahrzeuggliedende trennen zu können, muß entweder das Spannkabel in sich elastisch sein oder der Abstand zwischen den Enden des im wesentlichen undehnbaren Spannkabels muß veränderbar sein. ˚Ublich ist dabei ein in sich im wesentlichen nicht dehnbares Spannkabel, dessen beide Enden im Bereich der unteren, horizontalen Balgwand durch ein Spannschloß miteinander verbunden sind. Ist das Spannschloß geschlossen, so ist das Faltenbalgende in der Rinne des jeweiligen Fahrzeuggliedes festgelegt. Ist das Spannschloß geöffnet, so kann der Faltenbalg aus dem rinnenförmigen Ende der Fahrzeugwand herausgenommen werden, so daß er von dem Fahrzeugglied getrennt ist. Das Spannschloß besteht aus zwei Gewindezapfen, deren einander zugehrten Zapfenenden unterschiedlich weit in ein Kupplungsstück einzudrehen sind und deren andere Enden als Halterung für das jeweilige Spannkabelende ausgebildet sind.

Diese Vorrichtung arbeitet technisch einwandfrei, der bauliche Aufwand ist vertretbar, der notwendige Betätigungsaufwand wird dagegen häufig als zu groß empfunden. Trotz des zu hoch empfundenen Betätigungsaufwandes wurden bisher andere Lösungen noch nicht angeboten.

Aufgabe der Erfindung ist es, einen Faltenbalg der eingangs genannten Gattung so auszubilden, daß er ohne wesentlichen baulichen Mehraufwand gegenuber den bekannten Lösungen und ohne Beeinträchtigung der Funktionsfähigkeit wesentlich einfacher zu bedienen ist.

Der Lösung der Aufgabe dienen die Merkmale des Patentanspruchs 1.

Die Erfindung wird nachfolgend anhand der Zeichnung näher erläutert. In der Zeichnung zeigen:

Fig.1 eine Gesamtanordnung eines Faltenbalges,

Fig.2 eine Schnittdarstellung einer Einzelheit,

Fig.3 die erfindungsgemäße Spannvorrichtung, im Figurenteil 3a im wesentlichen die rechts, im Figurenteil 3b im wesentlichen die links von der Mittellinie M-M liegenden Teile der Spannvorrichtung,

Fig.4 eine weitere Ausführungsform der Erfindung als Gesamtanordnung und in Seitenansicht und

Fig.5 die Anordnung der Fig.4 in der Draufsicht.

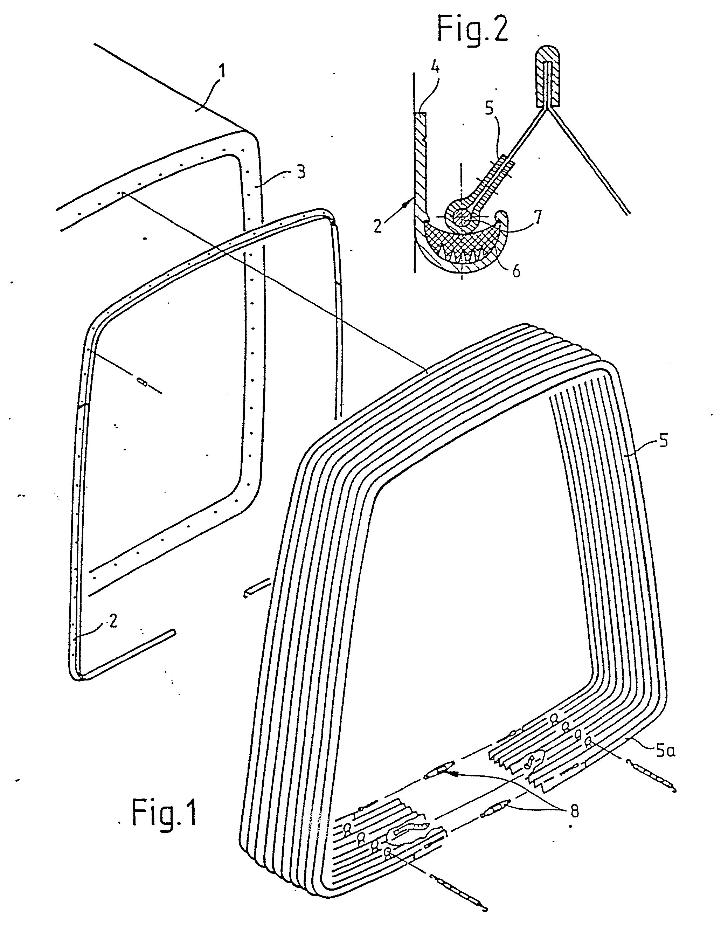

Dem hinteren, offenen Ende eines vorderen Fahrzeuggliedes 1 ist fest ein umlaufender Rahmen 2 zugeordnet, indem er beispielsweise auf die Stirnseite 3 des Fahrzeuggliedes 1 aufgeschraubt ist (Fig.1). Der Rahmen 2 ist rinnenförmig, d.h. er hat den Querschnitt eines U mit ungleich langen Schenkeln (Fig.2), wobei der längere Schenkel 4 dem Anschrauben des Rahmens an der Stirnseite des Fahrzeuggliedes dient. In den Faltenbalg 5 ist an seinem Ende ein Spannkabel 7 eingenäht, welches sich in das rinnenförmige Bett des Rahmens 2 legt. Zur besseren Dichtung ist in das Rahmenbett ein Gummiprofil 6 eingelegt und dort gesichert, und über dieses Gummiprofil stützt sich das Spannkabel 7 (unter Einschaltung der Balgwand) im Rahmenbett ab. Um das Faltenbalgende in dem Rahmen 2 zu halten, liegt das Spannkabel 7 mit Spannung in dem Endtuch des Faltenbalges, um das Faltenbalgende daran zu hindern, ungewollt über den kürzeren Schenkel des U des Rahmens 2 zu gelangen. Diese Spannung wird erfindungsgemäß wie folgt erzeugt bzw. beseitigt. Es ist dabei davon ausgegangen, daß der Faltenbalg an seinen beiden Enden gleich ausgestaltet ist, und mit jedem seiner Enden einer Stirnseite der beiden aufeinanderfolgenden Fahrzeugglieder zugeordnet ist.

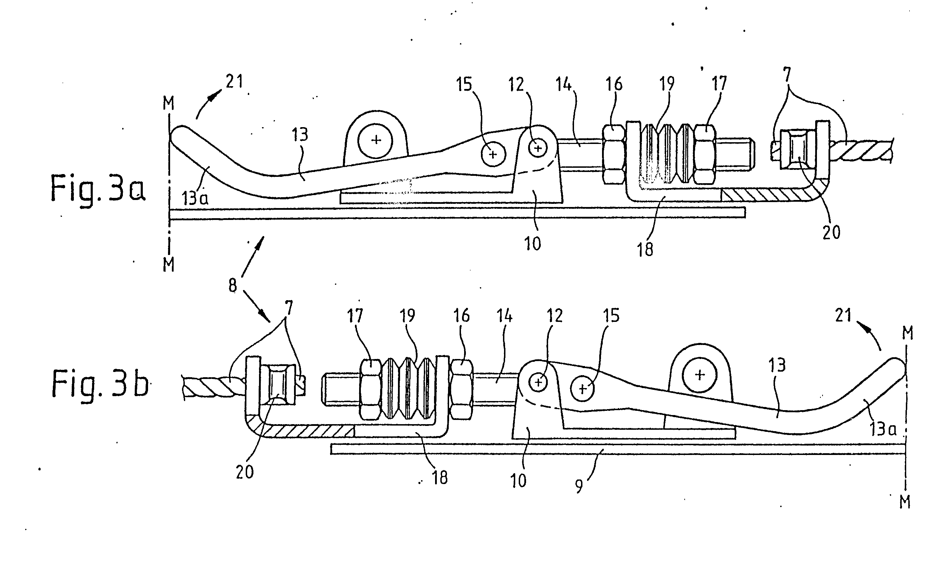

Die beiden Enden des Spannkabels 7 sind im Bereich der unteren, horizontalen Balgwand 5a mit einem Kniehebelspanner 8 miteinander verbunden. Der Kniehebelspanner 8 ist auf einer Grundplatte 9 aufgebaut, die an zwei Lagerböcken 10 gehalten ist (Fig.3). Jeder Lagerbock 10 ist mit einem in Fahrzeuglängsrichtung weisenden Lagerzapfen 12 versehen, auf dem ein Hebel 13 mit seinem einen Ende schwenkbar gelagert ist. Das andere Ende jedes Hebels 13 ist als manuell zu betätigender Griff 13a ausgebildet. Zwischen beiden Enden des Hebels 13 ist eine Kupplungsstange 14 an einem Zapfen 15 des Hebels 13 angelenkt, dessen Längsachse zur Längsachse des Lagerzapfens 12 parallel verläuft. Die Kupplungsstange 14 weist an ihrem der Anlenkung abgekehrten Ende einen Gewindeabschnitt auf, auf den in axialem Abstand zwei Muttern 16, 17 aufgeschraubt sind. Zwischen den beiden Muttern 16, 17 befindet sich ein U-förmiges Kupplungsstück 18 mit seinem einen Schenkel, wobei die der Anlenkung der Kupplungsstange 14 an dem Hebel 13 nähere Mutter 16 direkt an der Außenseite des Schenkels des Kupplungsstückes anliegt, während sich zwischen der Innenseite dieses Schenkels und der der Anlenkung entfernter liegenden Mutter 17 ein Federelement in der Form einer Tellerfeder 19 befindet. Am anderen Schenkel des Kupplungsstückes ist das Spannkabel 7 mit seinem einen Ende angehängt, wozu eine Klemmhülse 20 dient.

In der dargestellten Betriebsstellung der Vorrichtung haben die Enden des Spannkabels nahezu den geringstmöglichen Abstand voneinander, so daß der Faltenbalg gegenüber dem Fahrzeugende festgelegt ist. Die Hebel 13 sind mit ihren Griffen 13a an die Grundplatte 9 angeklappt. Der Abstand des Zapfens 15 von der Grundplatte 9 ist etwas geringer als der Abstand des Lagerzapfens 12. Zum Ausbau des Faltenbalges werden die Hebel 13 um den Lagerzapfen 12 in Richtung der Pfeile 21 geschwenkt, wobei zunächst die Federn 19 zusätzlich gespannt werden, bis die Zapfen 12, 15 und die Feder 19 in einer zur Grundplatte 9 parallelen Ebene liegen, um sich beim weiteren Schwenken der Hebel 13 zu entspannen, wobei sich der Abstand zwischen den Enden des Spannkabels 7 vergrößert und das Faltenbalgende über den Endrahmen gehoben werden kann.

Die Vorrichtung ist damit einfach zu bedienen, sie ist einfach im Aufbau und betriebssicher. Die Bedienung ist einfach, weil nur die Hebel 13 in einer von zwei Richtungen zu bewegen sind und mittels der beiden Hebel eine große Änderung des Abstandes zwischen den Spannkabelenden möglich ist. Durch die Änderungsmöglichkeit für den Abstand zwischen beiden Spannkabelenden kann das Faltenbalgende in einer relativ tiefen Rinne des Anschlußrahmens und damit zuverlässig festgelegt werden. Der Betriebssicherheit kommt auch zugute, daß beim Schwenken der Hebel zwischen ihren Endstellungen der Punkt durchschwenkt werden muß, in dem die Feder maximal gespannt ist.

Durch Verstellen der Muttern 16, 17 relativ zueinander kann die Vorspannung der Feder 19 verändert werden, womit die Spannung verändert wird, mit der das jeweilige Spannkabel in der Rinne des Balgendes gehalten ist. Durch Verstellen der Muttern 16,17 in gleicher Weise gegenüber dem Gewindezapfen 14 kann die effektive Grundlänge des Spannkabels verändert werden, wobei es zweckmäßig ist, derartige Veränderungen auf die vorzugweise vorzusehenden beiden Teile der Spannvorrichtung gleichmäßig zu verteilen.

Die Ebene, in der die Spannhebel 13 entsprechend den Pfeilen 21 zu schwenken sind, ist eine zur unteren, horizontalen Balgwand 5a parallele Ebene, wobei die Spannhebel 13 unterhalb der Augen 10 liegen, so daß diese von der einen Seite her vom Faltenbalg erfaßt werden und unter ihnen die Spannhebel schwenkbar sind.

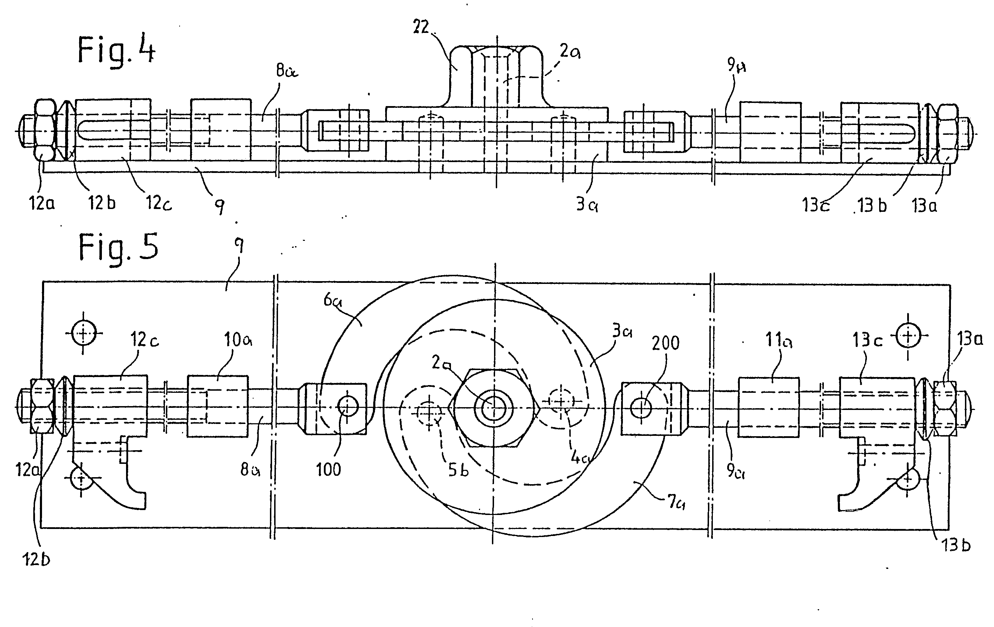

Der nachfolgend anhand der Fig.3 und 4 beschriebenen weiteren Ausgestaltung der vorliegenden Erfindung liegt die Aufgabe zugrunde, die Bedienung der Spannvorrichtung noch weiter zu vereinfachen.

Während bei der vorbeschriebenen Lösung die Einzelbetätigung jedes der beiden Kniehebel vorgesehen ist, sieht die nachfolgend beschriebene Ausgestaltung vor, daß die beiden Kniehebel mittels eines gemeinsamen Betätigungselementes gleichzeitig zu betätigen sind.

Es ist hier durch eine Betätigung des Kniehebelspanners mit seinen beiden Kniehebeln durch einen einzigen Handgriff möglich, der Faltenbalg kann an jedem Ende mit einem einzigen Handgriff gespannt und entspannt werden.

Auf der Grundplatte 9 ist mittels eines vertikalen Zapfens 2a eine Scheibe 3a um die Längsachse des Zapfens 2a verschwenkbar gelagert. Mit Zapfen 4a und 5b sind an der Scheibe 3a zwei entgegengesetzt gerichtete kreisbogenförmige Kniehebel 6a und 7a angelenkt. An ihren äußeren Enden sind die Kniehebel 6a, 7a in je einem Zapfen 100 bzw. 200 an je einem Spannbolzen 8a, 9a angelenkt. Die Spannbolzen sind in Richtung ihrer Längsachsen verstellbar und hierzu in je einem Lagerbock 10a bzw. 11a der Grundplatte 9 gelagert. Am äußeren Ende der Spannbolzen ist axial einstellbar je ein durch Längsschlitze radial federnder Seilbock 12c bzw. 13c gelagert. An den beiden Seilböcken ist das Spannseil zum Spannen und Festlegen des Faltenbalges am Fahrzeugende mit seinen beiden Enden befestigt, wozu diese sattelförmige Vertiefungen aufweisen, in denen die Spannkabelenden mit plombenförmigen Aufnahmen eingehängt sind. In der dargestellten Stellung der Scheibe liegen die Gelenkpunkte 5b, 200 einerseits und 4a, 100 andererseits auf verschiedenen Seiten des Zapfens 2a, der Abstand zwischen den Gelenkpunkten 100 und 200 und damit den Seilenden ist gering, das Seil ist gespannt und zieht das Ende des ihm zugeordneten Faltenbalges in eine Rinne des zugehörigen Fahrzeuges, an dem auf diese Weise der Faltenbalg festgelegt ist. Zum Öffnen der Verriegelung und zu entsprechenden Längen des Spannseiles wird die Scheibe 3a aus dieser dargestellten Betriebsstellung herausgeschwenkt, so daß die Gelenkpunkte 4a, 100 einerseits und 5b, 200 andererseits so seitlich versetzt werden, daß der Abstand zwischen den Gelenkpunkten 100, 200 und damit den Seilenden größer ist und das Seil aus der Rinne des Fahrzeuges herausgehoben werden kann und der Faltenbalg vom Fahrzeug getrennt werden kann.

In der dargestellten Betriebsstellung liegen die Gelenkpunkte 100, 200 auf einer Linie, die achsgleich zu den Längsachsen der Spannbolzen 8a, 9a liegen, während die Gelenkpunkte 4a,5b seitlich von dieser Linie liegen und beim Schwenken der Scheibe in die andere Stellung durch diese Linie hindurch bewegt werden, womit eine *Übertotpunktsteuerung zur sicheren Festlegung der dargestellten Betriebsstellung gegeben ist.

Der Schwenkung der Scheibe 3a dient ein mit ihr verbundener mehrflächiger Zapfen 22, auf dem ein manuell zu betätigender Schlüssel aufgesteckt werden kann.

Zweckmäßigerweise werden zwischen jedem der beiden Seilböcke 12c, 13c und der ihnen zugehörigen Kontermutter 12a, 13a Druckfedern, beispielsweise Tellerfedern 12b, 13b eingelegt, um den Anpreßdruck des Spannkabels in Grenzen verändern zu können, um ein unbeabsichtigtes Abheben des Seilbockes von den Kontermuttern zu verhindern und um einen relativen Freiheitsgrad beim Anziehen der Kontermuttern zu erhalten und um insbesondere bei extremen Temperaturen unterschiedliche Schrumpfweiten von Fahrzeug, Balg und Spannkabel ausgleichen zu können.

**Patentansprüche**

1. Zwischen zwei gelenkig miteinander verbundene Fahrzeugglieder einsetzbarer Faltenbalg (5) mit einer in Umfangsrichtung des Balges wirkenden Spannvorrichtung zur Festlegung des Balges am einen Ende gegenüber dem zugehörigen Fahrzeugglied (1), wobei das Balgende in der in Balgumfangsrichtung verlaufenden Rinne eines rinnenförmigen Rahmenprofiles (2) des Fahrzeuggliedes gehalten ist, in der die Spannvorrichtung liegt und dieses Balgende mit Spannung in der Rinne anlegt, wobei weiter die Spannvorrichtung ein Spannkabel (7) ist, dessen beide Ende mit veränderbarem Abstand relativ zueinander gehalten sind, dadurch gekennzeichnet, daß die Verbindung zwischen den beiden Spannkabelenden mit einem Kniehebelpaar erfolgt, wobei jeder der beiden Kniehebel(6a, 7a; 13) in einem Gelenkpunkt (4a, 5b; 12) an einer gemeinsamen Grundplatte (9) drehbar gelagert ist und diesem Gelenkpunkt gegenüber in der Längsrichtung des Seiles versetzt eines der beiden Seilenden befestigt ist und der Abstand zwischen beiden Seilenden durch Schwenken der beiden Kniehebel veränderbar ist.

2. Faltenbalg nach Anspruch 1, dadurch gekennzeichnet, daß der Anschluß jedes Endes des Spannkabels (7) an dem einen der beiden Kniehebel (6a, 7a; 13) über ein vorgespanntes Federelement (12b, 13b; 19) erfolgt.

3. Faltenbalg nach Anspruch 1 oder Anspruch 2, dadurch gekennzeichnet, daß jeder Kniehebel (13) am einen Ende schwenkbar um die quer zum Spannkabel (7) verlaufende Längsachse eines von zwei Zapfen (12) der ortsfesten gemeinsamen Grundplatte (9) schwenkbar ist, daß das andere Ende jedes Kniehebels (13) zum Angreifen einer Schwenkkraft ausgebildet ist (Handgriff 13a), und daß eines der beiden Kabelenden zwischen den Enden jeweils eines der beiden Kniehebel an diesem befestigt ist (Fig.3a, 3b).

4. Faltenbalg nach Anspruch 1 oder 2, dadurch gekennzeichnet, daß jeder Kniehebel (6a, 7a) am einen Ende gelenkig an der gemeinsamen, um eine zum Seil quer liegende Achse zwangsweise schwenkbaren Scheibe (3a) gelagert ist und an den anderen Enden der beiden Kniehebel eines der Seilenden befestigt ist, wobei beide Kniehebel bogenförmig um die Schwenkachse der gemeinsamen Scheibe (3a) herum geführt sind derart, daß in der einen Endstellung der Scheibe in der Längsrichtung des Seiles auf jeder Seite der Scheibenschwenkachse ein Anlenkpunkt des Seiles am einen Kniehebel und ein Lagerpunkt des anderen Kniehebels liegen, während in der anderen Endstellung der Scheibe (3a) auf jeder Seite der Scheibenschwenkachse Anlenkpunkte des Seiles am einen Kniehebel und dessen Lagerpunkt liegen (Figuren 4 und 5).

5. Faltenbalg nach Anspruch 2, dadurch gekennzeichnet, daß die Vorspannung der Federelemente (12b, 13b; 19) einstellbar ist.

6. Faltenbalg nach einem der Ansprüche 1, 2, 3 und 5, dadurch gekennzeichnet, daß an jedem Ende des Spannkabels (7) ein bügelförmiges Kupplungsstück (18) angeordnet ist, an dessen einem Schenkel das Spannkabel (7) eingehängt ist, und dessen anderer Schenkel zwischen zwei Anschlägen (16, 17) einer Kupplungsstange (14) gehalten ist, die am jeweiligen Kniehebel (13) angelenkt ist.

7. Faltenbalg nach Anspruch 6 in Verbindung mit Anspruch 5, dadurch gekennzeinet, daß sich der eine Schenkel des bügelförmigen Kupplungsstücks (18) an einem Anschlag (16) über das Federelement (19) abstützt.

8. Faltenbalg nach Anspruch 7, dadurch gekennzeichnet, daß das Federelement eine Tellerfeder (19) zwischen dem einen Schenkel des bügelförmigen Kupplungsstücks (18) und dem dem Kniehebelende abgekehrten Anschlag (17) ist.

9. Faltenbalg nach den Ansprüchen 6 bis 8, dadurch gekennzeichnet, daß die beiden Anschläge (16, 17) an zumindest einem Ende des Spannkabels (7) relativ zueinander einstellbar sind.

10. Faltenbalg nach Anspruch 4, dadurch gekennzeichnet, daß die dem Spannkabel zugeordneten Enden der Kniehebel (6a, 7a) über je einen Spannbolzen (8a) am Spennkabel (7) angeschlossen sind.

11. Faltenbalg nach Anspruch 4, dadurch gekennzeichnet, daß die Drehung der Scheibe (3a) mittels eines auf ein vielflächiges Kupplungsstück (22) der Scheibe aufsteckbaren Schlüssels zu bewirken ist.

**Claims**

1. A corrugated boot (5) introducible between two pivotally interconnected vehicle parts and comprising tensioning means which are operative around the boot periphery to secure the same at one end relatively to the associated vehicle member (1) the boot end being retained in a trough or the like of a trough-like frame section (2) of the vehicle member, the trough extending around the boot periphery, the tensioning means being received in the trough and engaging the latter boot end therein with tension, the tensioning means being a tensioning cable (7) whose two ends are secured relatively to one another at an adjustable distance from one another, characterised in that the connection between the two ends of the tensioning cable is by way of a pair of toggles, each of the two toggles (6a, 7a; 13) being mounted for rotation by way of a pivot joint (4a, 5b; 12) on a common baseplate (9), one of the two cable ends being so secured as to be offset lengthwise of the cable relatively to the pivot joint the distance between the two cable ends being adjustable by pivoting of the two toggle levers.

2. A boot according to claim 1, characterised in that each end of the tensioning cable (7) is connected by way of a prestressed spring element (12b, 13b; 19) to one of the two toggle levers (6a, 7a, 13).

3. A boot according to claim 1 or 2, characterised in that each toggle lever (13) is pivotable at one end around the longitudinal axis, the same extending transversely to the tensioning cable (7), of one of two pins (12) of the stationary common baseplate (9), the other end of each toggle lever (13) is adapted for the application of a pivoting force (lever 13a); and one of the two cable ends is secured to one of the two toggle levers between the ends of such lever (Figs. 3a, 3b).

4. A boot according to claim 1 or 2, characterised in that each toggle lever (6a, 7a) is pivotally mounted at one end on the common disc (3a) adapted to be pivoted positively around an axis transverse to the cable, and one of the cable ends is secured to the other ends of the two toggle levers, the two toggle levers so extending arcuately around the pivot axis of the common disc (3a) that in one end position thereof, as considered lengthwise of the cable, the pivot point of the cable to one toggle lever and a bearing point of the other toggle lever are disposed on each side of the disc pivot axis, while in the other end position of the disc (3a) pivot points of the cable on one toggle lever and the bearing point thereof are disposed on each side of the disc pivot axis (Figs. 4 and 5).

5. A boot according to claim 2, characterised in that the prestressing of the spring elements (12b, 13b; 19) is adjustable.

6. A boot according to any of clams 1, 2, 3 and 5, characterised in that a U-shaped coupling member (18) is disposed at each end of the tensioning cable (7), the same is secured to one arm of the member (18) and the other arm thereof is retained between two abutments (16, 17) of a coupling rod (14) pivoted to the particular toggle lever (13) concerned.

7. A boot according to claim 6 in association with claim 5, characterised in that one arm of the stirrup-shaped coupling member (18) bears by way of the spring element (19) on an abutment (16).

8. A boot according to claim 7, characterised in that the spring element is a cup spring (19) which is disposed between one aim of the coupling element (18) and the abutment (17) remote from the toggle lever end.

9. A boot according to claims 6 - 8, characterised in that the two abutments (16, 17) are adjustable relatively to one another at at least one end of the tensioning cable (7).

10. A boot according to claim 4, characteriséd in that those ends of the toggle levers (6a, 7a) which are associated with the tensioning cable are each connected thereto by way of a tensioning pin (8a).

11. A boot according to claim 4, characterised in that the disc (3a) can be rotated by means of a key or spanner or the like engageable with a multifaceted coupling element (22) of the disc.

## Revendications

1°) Soufflet (5) pour montage entre deux éléments de véhicule reliés l'un à l'autre par articulation, avec un dispositif de serrage agissant dans la direction périphérique du soufflet pour fixer le soufflet à une extrémité vis-à-vis de l'élément de véhicule correspondant (1), l'extrémité du soufflet étant maintenue dans une rainure s'étendant dans la direction périphérique du soufflet et formée dans un profilé d'encadrement (2) en forme de gouttière de l'élément de véhicule, le dispositif de serrage étant placé dans cette rainure et appliquant sous contrainte ladite extrémité du soufflet dans la rainure, le dispositif de serrage étant en outre un câble de serrage (7) dont les deux extrémités sont maintenues à distance variable l'une de l'autre, caractérisé en ce que la liaison des deux extrémités du câble de serrage est assurée par une paire de leviers à genouillère, chacun des deux leviers à genouillère (6a, 7a; 13) étant monté à pivot en un point d'articulation (4a, 5b; 12) sur une plaque de base commune (9), l'une des deux extrémités du câble étant fixée avec un décalage dans la direction longitudinale du câble par rapport à ce point d'articulation et la distance entre les deux extrémités du câble pouvant étre modifiée par pivotement des deux leviers à genouillère.

2°) Soufflet selon la revendication 1, caractérisé en ce que le raccordement de chaque extrémité du câble de serrage (7) est effectué sur l'un des deux leviers à genouillère (6a, 7a; 13) par l'intermédiaire d'un élément à ressort précontraint (12b, 13b; 19).

3°) Soufflet selon la revendication 1 ou la revendication 2, caractérisé en ce chaque levier à genouillère (13) est monté à pivotement à une extrémité autour de l'axe longitudinal s'étendant transversalement au câble de serrage (7), de l'un de deux tourillons (12) de la plaque de base commune (9) à position fixe, en ce que l'autre extrémité de chaque levier à genouillère (13) est agencée pour la prise d'une force de pivotement (poignée 13a), et en ce que l'une des deux extrémités du câble est fixée sur l'un des deux leviers à genouillère entre les extrémités de ce levier.

4°) Soufflet selon la revendication 1 ou la revendication 2, caractérisé en ce que chaque levier à genouillère (6a, 7a) est monté à pivot à une extrémité sur un disque commun (3a) pivotant obligatoirement autour d'un axe placé transversalement au câble, l'une des extrémités du câble étant fixée sur les autres extrémités des deux leviers à genouillère, les deux leviers à genouillère étant guidés en forme d'arc autour de l'axe de pivotement du disque commun (3a), de manière que dans l'une des positions d'extrémité du disque se trouvent, dans la direction longitudinale du câble, de chaque côté de l'axe de pivotement du disque, un point d'articulation du câble sur un levier à genouillère et un point de palier de l'autre levier à genouillère, tandis que dans l'autre position d'extrémité du disque (3a) se trouvent, de chaque côté de l'axe de pivotement du disque, des points d'articulation du câble sur un levier à genouillère et le point de palier de celui-ci (figures 4 et 5).

5°) Soufflet selon la revendication 2, caractérisé en ce que la précontrainte des éléments à ressorts (12b, 13b; 19) est réglable.

6°) Soufflet selon l'une des revendications 1, 2, 3 et 5, caractérisé en ce qu'une pièce d'accouplement (18) en forme d'étrier est disposée sur chaque extrémité du câble de serrage (7), le câble de serrage (7) étant accroché sur l'une des branches de cette pièce, l'autre branche étant maintenue entre deux butées (16, 17) d'une tige d'accouplement (14) articulée sur l'extrémité correspondante du levier à genouillère (13).

7° Soufflet selon la revendication 6 en liaison avec la revendication 5, caractérisé en ce que l'une des branches de la pièce d'accouplement (18) en forme d'étrier s'appuie sur une butée (16) par l'intermédiaire de l'élément à ressorts (19).

8°) Soufflet selon la revendication 7, caractérisé en ce que l'élément à ressorts est constitué par des rondelles Belleville placées entre la branche de la pièce d'accouplement (18) et la butée (17) située à l'opposé de l'extrémité du levier à genouillère.

9°) Soufflet selon les revendications 6 à 8, caractérisé en ce que les deux butées (16, 17) sont réglables l'une par rapport à l'autre, au moins à une extrémité du câble de serrage.

10°) Soufflet selon la revendication 4, caractérisé en ce que les extrémités des leviers à genouillère (6a, 7a) associées au câble de serrage sont respectivenent raccordées au câble de serrage (7) par l'intermédiaire d'une tige de serrage (8a).

11°) Soufflet selon la revendication 4, caractérisé en ce que la rotation du disque (3a) est commandée par une clé s'engageant sur une pièce d'accouplement polygonale (22) du disque.

Fig.2

Fig.1

Fig. 3a

Fig. 3b

Fig. 4

Fig. 5

0114913